# DEMANDE DE BREVET EUROPEEN

(11) **EP 0 965 481 A1**
(43) Date de publication de la demande: **22.12.1999**
(21) Numéro de dépôt: 99401462.9
(22) Date de dépôt: 15.06.1999
(51) Int. Cl.: B60N 2/48

(54) **Dispositif de blocage en hauteur d'un appui-tête notamment pour siège de véhicule automobile**

(30) Priorité: 15.06.1998 FR 9807488
(71) Demandeur: CENTRE D'ETUDES ET RECHERCHE POUR L'AUTOMOBILE ( CERA), F-51100 Reims (FR)
(72) Inventeur: Le Gall, Francois, 02130 Coulonges Cohan (FR)
(74) Mandataire: Geismar, Thierry

(57) **Abrégé**

L'invention concerne un dispositif de blocage en hauteur d'un appui-tête de siège comprenant au moins une broche (1) munie de crans (12) et engagée dans une douille (2) solidaire de la structure du siège.

Ce dispositif est agencé pour coopérer avec des crans (12) étagés latéralement sur la broche. Il comprend un premier ressort (7) monté sur la douille, ce ressort ayant une première branche (10) susceptible de s'engager dans un des crans, et une surface de came (15) agencée pour coopérer avec la branche (10) pour l'amener d'une position où elle est engagée dans un des crans à une position où elle libère la broche lorsque cette dernière est amenée d'une position de fonctionnement normal à une position de réglage.

Application aux sièges de véhicules automobiles.

## Description

La présente invention concerne un dispositif de blocage en hauteur d'un appui-tête, notamment pour siège de véhicule automobile, et plus particulièrement d'un tel appui-tête du type comprenant au moins une broche munie de crans et engagée dans une douille solidaire de la structure dudit siège.

Les appuis-tête utilisés dans l'industrie automobile comprennent de façon connue un coussin d'appui monté à l'extrémité supérieure de deux broches dont l'autre extrémité pénètre dans le dossier du siège. Lorsque ces appuis-tête sont réglables en hauteur, les broches sont généralement montées coulissantes dans des douilles solidaires de l'armature du siège.

Ces broches comportent alors souvent des crans de blocage étagés le long d'une génératrice avant ou arrière et coopérant avec des doigts escamotables commandables par l'utilisateur pour bloquer l'appui-tête en hauteur dans un certain nombre de positions possibles. Ces crans permettent un réglage dans un nombre de positions équivalent à celui des crans.

Les appuis-tête des véhicules automobiles ont bien évidemment pour fonction de procurer un confort aux passagers, mais plus encore d'assurer leur sécurité. En effet, lors d'un choc par l'arrière du véhicule, le corps de l'occupant est soumis à une accélération qui le plaque au dossier du siège. On constate alors que la composante verticale de l'effort exercé par la tête de cet occupant sur le coussin de l'appui-tête tend généralement, pour des raisons bio-mécaniques, à enfoncer l'appui-tête dans le dossier du siège. On comprend alors que si le réglage en hauteur n'est pas assez ferme, rien n'empêche la tête de l'occupant de partir en arrière, ce qui peut provoquer de graves lésions cervicales.

De plus, lors de chocs frontaux, les appuis-tête ont tendance à monter sous l'effet de la force centrifuge induite par le basculement rapide des dossiers de siège vers l'avant. Cet effet peut aller jusqu'à l'éjection des appuis-tête. Il est donc important de maintenir également fermement l'appui-tête lors de chocs frontaux.

Dans les mêmes circonstances, la tête d'un occupant arrière peut venir heurter de bas en haut l'appui-tête du siège se trouvant devant lui et ainsi le dérégler.

Enfin, en cas de collision en chaîne, un choc avant est souvent suivi d'un choc arrière. Les divers effets mentionnés ci-dessus sont alors cumulés.

Par ailleurs, et pour en revenir à la fonction de confort de l'appui-tête, il faut qu'il soit aisément réglable en hauteur. En particulier, il est souhaitable que l'utilisateur n'ait pas à exercer un effort de réglage aussi important que celui qui est nécessaire pour enfoncer l'appui-tête par un choc exercé de haut en bas ou d'une manière générale, que celui auquel l'appui-tête doit résister en cas de collision, afin de ne pas se dérégler.

Enfin, il doit être tenu compte du fait que, pour des raisons de symétrie des efforts et afin d'éviter un coincement de l'appui-tête lors de son réglage en hauteur, l'utilisateur doit, lorsqu'il est assis sur le siège, effectuer ce réglage à l'aide de ses deux mains. Ceci rend particulièrement peu recommandable tout système nécessitant l'usage d'un organe de réglage tel qu'un bouton ou une mollette.

La présente invention vise à pallier ces inconvénients. Plus particulièrement, l'invention vise à fournir un dispositif de montage et de blocage en hauteur d'un appui-tête, notamment de siège de véhicule automobile, qui permette un réglage aisé par l'utilisateur installé sur le siège et assure un blocage en hauteur efficace en utilisation normale et surtout en cas d'accident.

A cet effet, l'invention a pour objet un dispositif de blocage en hauteur d'un appui-tête de siège, notamment de véhicule automobile, ledit appui-tête comprenant au moins une broche munie de crans et engagée dans une douille montée sur la structure dudit siège, caractérisé par le fait qu'il est agencé pour coopérer avec des crans étagés latéralement sur la broche, et qu'il comprend un premier ressort monté sur ladite douille, ledit ressort ayant une première branche susceptible de s'engager dans un desdits crans, et une surface de came agencée pour coopérer avec ladite branche pour l'amener d'une position où elle est engagée dans un desdits crans à une position où elle libère ladite broche lorsque celle-ci est amenée d'une position de fonctionnement normal à une position de réglage.

Ainsi, lorsque l'appui-tête est en position de fonctionnement normal, la branche du ressort est engagée dans un cran et maintient l'appui-tête à la hauteur correspondante.

Lorsque l'utilisateur souhaite modifier la hauteur du coussin, il lui suffit d'amener l'appui-tête en position de réglage en le tirant vers l'avant. La surface de came provoque l'écartement de la branche du ressort qui sort du cran et libère la broche. L'appui-tête peut alors coulisser vers le haut ou vers la bas jusqu'à ce qu'il soit ramené en position de fonctionnement normal. La branche du ressort s'engage dans le cran le plus proche où elle bloque de nouveau l'appui-tête.

Dans un mode de réalisation particulier, ladite douille est montée sur la structure dudit siège pivotante dans un plan sensiblement parallèle au plan médian de l'appui-tête.

De préférence, le dispositif selon l'invention comprend un deuxième ressort agencé pour presser ladite broche en position de fonctionnement normal.

Avantageusement, le premier ressort est un ressort en épingle dont la deuxième branche est agencée pour coopérer avec d'autres crans étagés de l'autre côté de la broche en vis-à-vis des premiers crans.

Ces deuxièmes crans auront des flancs peu inclinés de manière à ne pas empêcher un coulissement aisé de l'appui-tête lors de son réglage. Leur fonction est en effet uniquement de signaler à l'utilisateur, par une très légère résistance, que l'appui-tête se trouve en vis-à-vis d'une de ses positions de maintien.

Plus particulièrement, ladite douille peut être solidaire d'un doigt de manoeuvre et être montée pivotante autour de son axe vertical, une butée étant prévue solidaire de ladite structure pour coopérer avec ladite deuxième branche pour l'écarter d'un desdits autres crans lors d'un tel pivotement.

Cet autre cran est alors un cran de verrouillage possédant une configuration particulière. Le doigt de manoeuvre permet d'extraire l'appui-tête en dépit de ce cran.

Egalement dans un mode de réalisation particulier, ladite surface de came est constituée d'un trou percé dans une pièce de support et dans lequel ladite première branche est engagée.

L'invention a également pour objet une broche d'appui-tête caractérisée par le fait qu'elle comporte des crans étagés le long d'au moins une de ses surfaces latérales.

Dans un mode de réalisation particulier, cette broche comporte d'autres crans étagés le long de son autre surface latérale, ces derniers crans ayant des surfaces relativement faiblement inclinés.

Plus particulièrement, la broche selon l'invention peut comporter un cran d'extrémité de verrouillage en dessous desdits autres crans.

On décrira maintenant, à titre d'exemple non limitatif, un mode de réalisation particulier de l'invention, en référence aux dessins annexés dans lesquels:

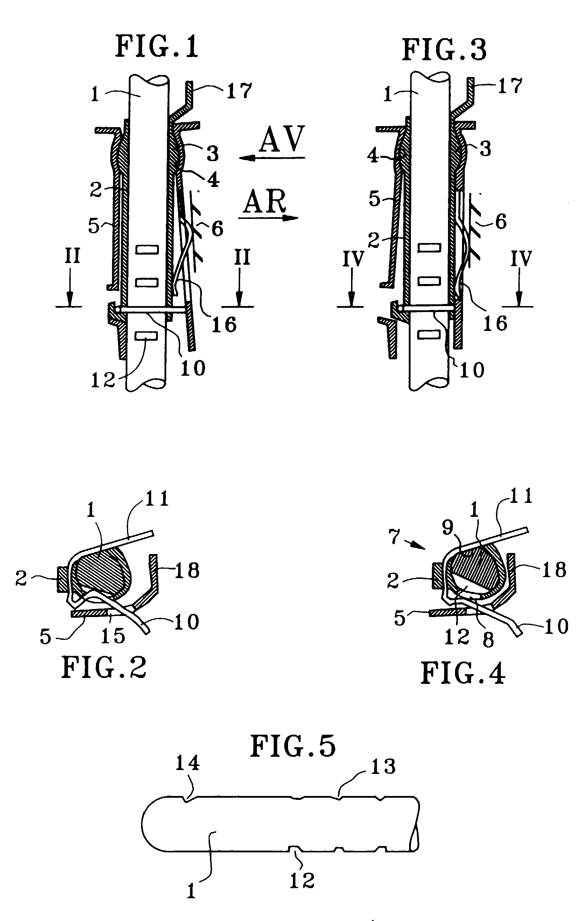

- la figure 1 est une vue en coupe axiale d'un dispositif selon l'invention en position de fonctionnement normal;
- la figure 2 est une vue en coupe selon la ligne II-II de la figure 1;
- la figure 3 est une vue similaire à celle de la figure 1 du dispositif en position de réglage;
- la figure 4 est une vue en coupe selon la ligne IV-IV de la figure 3; et
- la figure 5 est une vue partielle d'une broche susceptible de coopérer avec le dispositif selon l'invention.

On voit aux figures une broche d'appui-tête 1 engagée dans une douille de maintien 2. L'extrémité supérieure de la douille 2 forme une sphère 3 disposée dans un logement sphérique 4 d'une pièce de support 5. La pièce 5 est montée par tout moyen convenable solidaire de la structure 6 du dossier du siège d'un véhicule automobile.

La douille 2 supporte un ressort en épingle 7 dont la partie centrale est solidaire de la douille. Cette dernière comporte deux fentes 8 et 9 en vis-à-vis des deux branches 10 et 11 de ce dernier. Ainsi, ces deux branches peuvent pénétrer dans ces fentes et s'engager chacune dans un cran de deux séries de crans 12 et 13. Chacune de ces séries de crans est étagée latéralement d'un des côtés de la broche, en vis-à-vis les uns des autres.

Les crans 12, du côté de la branche 10 du ressort 7, sont relativement profonds et à flancs abrupts, de sorte que lorsque la branche 10 est logée dans un de ces crans elle empêche tout mouvement de coulissement de la broche 1 dans la douille 2. Par contre, les crans 13 du côté de la branche 11 du ressort sont peu profonds et à flancs peu inclinés de sorte que lorsque la branche 11 est logée dans un de ces crans, elle n'induit qu'une faible résistance, avertissant seulement l'utilisateur que la branche 10 est en face d'un cran 12.

Enfin, un cran d'extrémité de verrouillage14 est prévu sur la broche 1 en dessous des crans 13. Son flanc bas est abrupt pour empêcher l'extraction de l'appui-tête, alors que son flan haut est faiblement incliné pour permettre à la branche 11 du ressort de sortie du cran par enfoncement de la broche 1 dans la douille 2.

La branche 10 du ressort 7 est engagée dans un trou 15 du support 5. Ce trou est agencé pour faire office de came, écartant la branche 10 de la broche 1 lorsque le ressort est approché du support 5 par la douille 2.

Un ressort à lame 16 a une de ses extrémités fixée à la pièce de support 5 et son autre extrémité en appui sur la douille 2. Le ressort 16 forme un coude en appui sur la structure 6 de sorte qu'il pousse la douille 2, et donc la broche 1 et l'ensemble de l'appui-tête vers l'avant (flèche AV des figures). Dans cette position, les bords du trou 15 permettent à la branche 10 du ressort 7 de s'engager dans un cran 12.

Lorsque l'utilisateur tire l'appui-tête vers l'avant, les bords du trou 15 écartent la branche 10 du ressort et libèrent la broche permettant le réglage de la hauteur de l'appui-tête.

Un doigt de manoeuvre 17 est solidaire de la douille 2 et dépasse de la garniture du dossier du siège. Ce doigt 17 permet de faire pivoter la douille autour de son axe sensiblement vertical.

Lorsque l'on souhaite extraire l'appui-tête, on l'amène tout d'abord en butée par son cran 14 contre la branche 11 du ressort en épingle 7. A l'aide du doigt 17, on fait ensuite pivoter la douille 2. La partie centrale du ressort en épingle 7 étant solidaire de la douille 2, ce ressort est entraîné dans ce mouvement jusqu'à ce que l'extrémité de la branche 11 vienne buter contre une butée 18 de la pièce de support 5. La poursuite de ce mouvement fait plier cette branche qui sort ainsi du cran 14, libérant ainsi l'appui-tête.

## Revendications

1. Dispositif de blocage en hauteur d'un appui-tête de siège, notamment de véhicule automobile, ledit appui-tête comprenant au moins une broche (1) munie de crans (12) et engagée dans une douille (2) montée sur la structure (6) dudit siège, caractérisé par le fait qu'il est agencé pour coopérer avec des crans (12) étagés latéralement sur la broche, et qu'il comprend un premier ressort (7) monté sur ladite douille, ledit ressort ayant une première branche (10) susceptible de s'engager dans un desdits crans, et une surface de came (15) agencée pour coopérer avec ladite branche pour l'amener d'une position où elle est engagée dans un desdits crans à une position où elle libère ladite broche lorsque cette dernière est amenée d'une position de fonctionnement normal à une position de réglage.

2. Dispositif selon la revendication 1, dans lequel ladite douille (2) est montée sur la structure dudit siège pivotante dans un plan sensiblement parallèle au plan médian de l'appui-tête.

3. Dispositif selon l'une quelconque des revendications 1 et 2, comprenant un deuxième ressort (16) agencé pour presser ladite broche en position de fonctionnement normal.

4. Dispositif selon l'une quelconque des revendications 1 à 3, dans lequel le premier ressort (7) est un ressort en épingle dont la deuxième branche (11) est agencée pour coopérer avec d'autres crans (13) étagés de l'autre côté de la broche en vis-à-vis des premiers crans (12).

5. Dispositif selon la revendication 4, dans lequel ladite douille (2) est solidaire d'un doigt de manoeuvre (17) et est montée pivotante autour de son axe vertical, une butée (18) étant prévue solidaire de ladite structure pour coopérer avec ladite deuxième branche pour l'écarter d'un desdits autres crans lors d'un tel pivotement.

6. Dispositif selon l'une quelconque des revendications 1 à 5, dans lequel ladite surface de came est constituée d'un trou percé dans une pièce de support (5) et dans lequel ladite première branche est engagée.

7. Broche d'appui-tête caractérisée par le fait qu'elle comporte des crans (12) étagés le long d'au moins une de ses surfaces latérales.

8. Broche selon la revendication 7 comportant d'autres crans (13) étagés le long de son autre surface latérale, ces derniers crans ayant des flancs relativement faiblement inclinés.

9. Broche selon la revendication 8, comportant un cran d'extrémité de verrouillage (14) en dessous desdits autres crans.
